# EUROPÄISCHE PATENTSCHRIFT

(11) **EP 3 006 228 B1**
(45) Veröffentlichungstag und Bekanntmachung des Hinweises auf die Patenterteilung: **26.04.2017**
(21) Anmeldenummer: 14187959.3
(22) Anmeldetag: 07.10.2014
(51) Int. Cl.: B60C 9/00, D02G 3/48

(54) **Hybridkord zur Verwendung als Festigkeitsträger in einem Bauteil eines Fahrzeugluftreifens und Fahrzeugluftreifen**
Hybrid cord for use as a rigidity support in a component of a vehicle pneumatic tyre and vehicle pneumatic tyre
Corde hybride destinée à être utilisée en tant que support de fixation dans un composant d'un pneu de véhicule et pneus de véhicule

(43) Veröffentlichungstag der Anmeldung: 13.04.2016
(73) Patentinhaber: Continental Reifen Deutschland GmbH, 30165 Hannover (DE)
(72) Erfinder: Wahl, Günter, 31249 Hohenhameln (DE); Kramer, Thomas, 32049 Herford (DE); Reese, Wolfgang, 31228 Peine (DE)
(74) Vertreter: Finger, Karsten

(56) Entgegenhaltungen:
- EP-A1- 1 743 964
- DE-A1-102010 017 786
- DE-A1-102012 108 523

## Beschreibung

Die Erfindung betrifft einen Hybridkord zur Verwendung als Festigkeitsträger in einem Bauteil eines Fahrzeugluftreifens aus zumindest zwei miteinander endverdrehten Garnen, wobei wenigstens ein erstes Garn ein hochmoduliges Garn und ein weiteres Garn ein niedermoduliges Garn ist. Die Erfindung betrifft ferner einen Fahrzeugluftreifen, welcher einen Bauteil mit einem derartigen Hybridkord als Festigkeitsträger aufweist.

Es ist bekannt, Hybridkorde als Festigkeitsträger in Reifenbauteilen, wie beispielsweise Gürtellagen, Karkasslagen oder Bandagenlagen von Gürteln, zu verwenden. Übliche Hybridkorde setzen sich insbesondere aus einem hochmoduligen Filamentgarn und einem niedermoduligen Filamentgarn zusammen. Das hochmodulige Garn ist meist ein Garn aus Aramid, das niedermodulige Garn besteht meist aus einem Polyamid, vorzugsweise PA 6.6 oder PA 6. So ist beispielsweise aus der DE 10 2008 037 615 A1 ein Hybridkord zur Verwendung als Festigkeitsträger in der Gürtelbandage eines Fahrzeugluftreifens für PKW bekannt, welcher aus zwei miteinander verdrehten Filamentgarnen besteht, wobei das eine Garn aus Aramid und das andere Garn aus Polyamid, insbesondere aus Nylon, besteht. Beide Garne sind in die gleiche Richtung erstverdreht, der Hybridkord ist in die entgegengesetzte Richtung verdreht. Durch die Verwendung dieses Hybridkordes in der Gürtelbandage soll die Hochgeschwindigkeitstauglichkeit des Reifens verbessert werden. Aus der DE 10 2011 053 264 A1 ist ein Hybridkord bekannt, welcher beispielsweise die Konstruktion Aramid 1670x2 + PA 6.6 1400×1 aufweist.

Die bekannten Kombinationen aus zumindest einem hochmoduligen Filamentgarn mit zumindest einem niedermoduligen Filamentgarn ergeben Hybridkorde, welche eine hohe Hysterese aufweisen. Filamentgarne, beispielsweise solche aus Nylon, zeigen eine Hysterese, die auf der Bewegung von Polymerketten basiert, bei Dehnung löst sich die Knäuelstruktur der Polymerketten. In Folge ihres Aufbaus weisen die bekannten Hybridkorde ein bestimmtes Kraft-Dehnungs-Verhalten auf. In einem Zugkraft-/Dehnungs-Diagramm weist die Kurve bei geringer Dehnung zunächst eine geringe Steigung auf, bei höherer Dehnung steigt die Kurve immer stärker an, sodass im letzten Bereich eine weitere geringe Dehnung mit einem hohen Kraftaufwand verbunden ist. Dieses Kraft-Dehnungs-Verhalten bekannter Hybridkorde ermöglicht beim Aufbauprozess des Reifens - bei der Bombage - und beim nachfolgenden Einformen des Rohreifens in eine Vulkanisationsform eine ausreichende Erhebung, im fertigen Reifen eine gute Reifengleichförmigkeit und eine gute Hochgeschwindigkeitstauglichkeit. Bekannte Hybridkorde weisen insbesondere infolge der hohen Hysterese des niedermoduligen Filamentgarnes insgesamt eine höhere Hysterese auf. Werden bekannte Hybridkorde in Gürtellagen oder Bandagenlagen von Gürteln als Festigkeitsträger verwendet, können beim Laufbetrieb des Reifens, bedingt durch die Dehnung der Hybridkorde, Reibungsverluste auftreten, die sich auf den Rollwiderstand des Reifens nachteilig auswirken können.

Aus der DE 10 2010 017 786 A1 ist es bekannt, ein Elastomerprodukt, insbesondere einen Fahrzeugluftreifen mit einem Kord aus zwei oder drei endverdrehten Multifilamentgarnen zu verstärken, wobei zumindest ein Multifilamentgarn dieses Kordes aus Polyamid 10.10 und zumindest ein anderes nicht aus Polyamid 10.10 besteht. Aus der EP 1 743 964 A1 ist ein Kord, beispielsweise zur Verstärkung von Keilriemen oder Zahnriemen, bekannt, welcher aus einem Kern und einem Mantel besteht, wobei der Kern in eine Matrix eingebettete Hochmodulfasern enthält, welche mit den Mantel bildenden Fasern zumindest überwiegend umhüllt ist. Die Matrix des Kerns ist ein Thermoplast. Die den Mantel bildenden Fasern werden von mindestens einem Multifilamentgarn gebildet, welches um den Kern gewickelt ist. Die DE 10 2012 108 523 A1 befasst sich mit einem Verstärkungskord, insbesondere für Fahrzeugluftreifen, welcher aus wenigstens einem Garn besteht, welches aus Polyethylenfuranat besteht, wobei das Polyethylenfuranat vollständig oder zumindest teilweise aus Biomassen- und/oder nachwachsenden Rohstoffen hergestellt ist.

Der Erfindung liegt die Aufgabe zugrunde, einen Hybridkord zur Verfügung zu stellen, welcher bei seiner Verwendung als Festigkeitsträger in Reifenbauteilen, insbesondere in Gürtellagen oder Gürtelbandagen, die Erhebung des Rohreifens mit geringerem Kraftaufwand als mit bekannten Hybridkorden ermöglicht und im fertig vulkanisierten Reifen nach wie vor eine gute Reifengleichförmigkeit und eine gute Hochgeschwindigkeitstauglichkeit gewährleistet.

Gelöst wird die gestellte Aufgabe erfindungsgemäß dadurch, dass das hochmodulige Garn ein Filamentgarn und das niedermodulige Garn ein Garn aus Stapelfasern ist, wobei das hochmodulige Garn eine Bruchdehnung in einem Bereich von 2 % bis 8 % und das niedermodulige Garn aus Stapelfasern eine Bruchdehnung im Bereich ≥ 9 % aufweist.

Ein erfindungsgemäßer Hybridkord enthält daher wenigstens ein hochmoduliges Garn, welches ein Filamentgarn ist, sodass der Hybridkord bei einer Dehnung ab etwa 3 % einen hohen Elastizitätsmodul aufweist. Daraus resultieren eine sehr gute Reifengleichförmigkeit und eine sehr gute Hochgeschwindigkeitstauglichkeit von Reifen mit einem solchen Hybridkord als Festigkeitsträger im Gürtel oder einer Gürtelbandage. Das aus Stapelfasern gesponnene Garn ist unabhängig davon, aus welchem Material seine Fasern bestehen, ein niedermoduliges Garn, welches sich leicht dehnen lässt, da die Dehnung über ein Abgleiten der einzelnen kurzen Fasern aneinander erfolgt. Dadurch weist der Hybridkord vorteilhafterweise eine niedrige Hysterese auf. Wird ein erfindungsgemäßer Hybridkord in einer Gürtellage, einer Bandagenlage eines Gürtels und/oder in der Karkasse als Festigkeitsträger verwendet, ist die Erhebung des Rohreifens bei der Bombage und beim Einformen des Reifens in die Vulkanisationsform mit geringem Kraftaufwand verbunden. Im fertig vulkanisierten Reifen kommen die Vorteile des hochmoduligen Garns voll zum Tragen. Zu diesen gehört das Sicherstellen einer hohen Umfangssteifigkeit des Reifens, wodurch die dynamische Kontur bei Umfangswachstum vorteilhaft beeinflusst wird. Beim Laufbetrieb des Reifens bewirkt das "Abgleiten" der Stapelfasern geringere Hystereseverluste, sodass der Rollwiderstand günstig beeinflusst wird.

Als Material für das Garn aus Stapelfasern ist eine Vielzahl von Materialien geeignet. So können die Stapelfasern Fasern aus Aramid, Polyimid, Polyamid, Polyester, PPS oder PEEK sein, aber auch Naturfasern aus Baumwolle, Jute, Flachs, Viskose^{®} oder Modal^{®}. Für das hochmodulige Filamentgarn eignen sich vor allem Filamente aus Aramid, Polyimid, PPS oder PEEK.

Bei einer bevorzugten Ausführung der Erfindung weist das hochmodulige Garn eine Feinheit von 500 dtex bis 2500 dtex, insbesondere von 1100 dtex bis 1800 dtex, auf. Das Garn aus Stapelfasern weist insbesondere eine Feinheit von 300 dtex bis 1400 dtex, vorzugsweise von 400 dtex bis 1100 dtex, auf.

Die Erfindung betrifft ferner einen Fahrzeugluftreifen in Radialbauart mit einem mehrlagigen Gürtel und gegebenenfalls einer den Gürtel radial außen bedeckenden Gürtellage. In dem erfindungsgemäßen Reifen weist zumindest eine Gürtellage als Festigkeitsträger einen erfindungsgemäßen Hybridkord auf. Alternativ oder zusätzlich kann auch die Radialkarkasse oder die Gürtelbandage als Festigkeitsträger einen erfindungsgemäßen Hybridkord enthalten.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 einen Querschnitt durch einen erfindungsgemäßen Hybridkord,
Fig. 2 eine Ansicht eines Längsabschnittes eines erfindungsgemäßen Hybridkordes und
Fig. 3 ebenfalls eine Ansicht eines Längsabschnittes eines erfindungsgemäßen Hybridkordes im gedehnten Zustand.

In der Beschreibung und den Patentansprüchen ist mit dem Begriff "hochmoduliges Garn" ein Garn gemeint, dessen Bruchdehnung (ermittelt gemäß ASTM D885) in einem Bereich von 2 % bis 8 % liegt, mit dem Begriff "niedermoduliges Garn" ist ein Garn gemeint, dessen Bruchdehnung (ermittelt gemäß ASTM D885) in einem Bereich ≥ 9 % liegt.

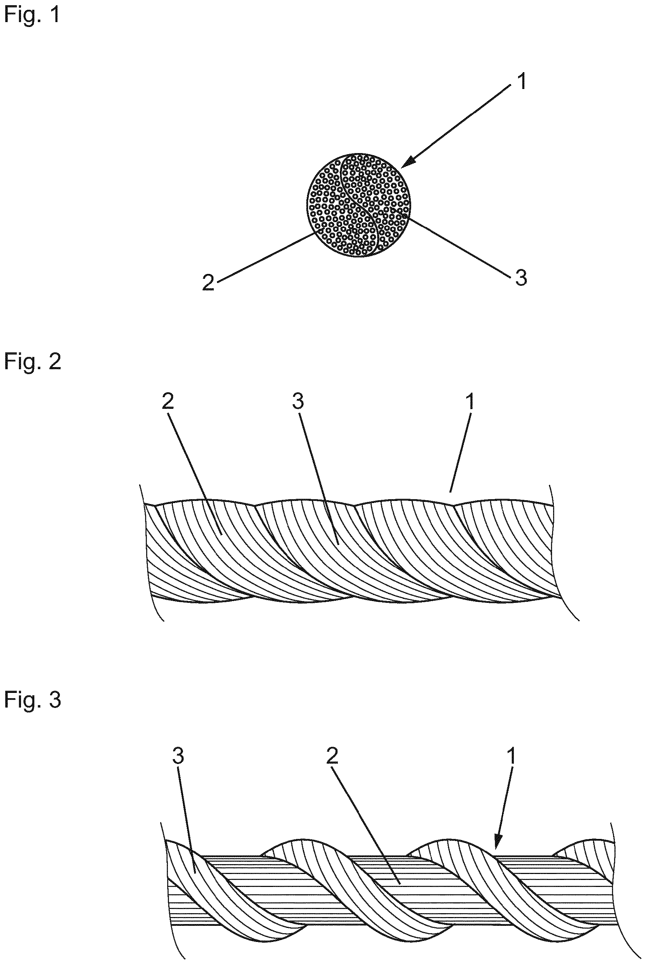

Die Figuren 1 bis 3 zeigen ein Ausführungsbeispiel eines erfindungsgemäßen Hybridkordes 1, welcher die Konstruktion 1×2 aufweist und daher aus zwei Garnen 2, 3 besteht. Fig. 1 und Fig. 2 zeigen den Hybridkord 1 unmittelbar nach seiner Herstellung. Das eine Garn 2 ist ein hochmoduliges Filamentgarn, dessen Filamente wahlweise aus einem Aramid, aus einem Polyimid, beispielsweise PBO (Polyoxadiazobenzimidazol), aus PPS (Polyphenylensulfid), aus PEEK (Polyetheretherketon) und dergleichen bestehen, daher aus Filamenten mit einem hohen Elastizitätsmodul. Das Garn 2 weist ferner eine Feinheit von 500 dtex bis 2500 dtex, insbesondere 1100 dtex bis 1800 dtex, auf und ist mit einer Verdrehungszahl von 200 T/m bis 650 T/m (turns per meter), insbesondere 300 T/m bis 500 T/m, entweder in Z-Richtung oder in S-Richtung erstverdreht.

Das Garn 3 ist ein Garn aus Stapelfasern, welches durch Spinnen aus miteinander verdrehten einzelnen kurzen Fasern, welche insbesondere eine Länge von 2 mm bis 50 mm aufweisen, hergestellt ist. Die Fasern des Garnes 3 können aus Chemiefasern mit einem hohen Elastizitätsmodul bestehen, beispielsweise aus dem gleichen Material wie die Filamente des Garnes 2, daher aus einem Aramid, aus einem Polyimid, beispielsweise PBO (Polyoxadiazobenzimidazol), aus PPS (Polyphenylensulfid), aus PEEK (Polyetheretherketon) und dergleichen. Darüber hinaus eignen sich für die Herstellung des Garnes 3 auch Naturfasern, wie Baumwolle, Flachs, Jute, Viskose^{®} oder Fasern aus Modal^{®}. In Folge des Aufbaus aus Stapelfasern ist das Garn 3 selbst ein niedermoduliges Garn. Auch das Garn 3 erhält eine Erstverdrehung in Z-Richtung oder in S-Richtung, wobei die Drehrichtung mit jener des Garnes 2 vorzugsweise übereinstimmt. Das Garn 3 weist ferner eine Feinheit von 300 dtex bis 1400 dtex, insbesondere von 400 dtex bis 1100 dtex, auf. Die Verdrehungszahl der Erstverdrehung beträgt 200 T/m bis 650 T/m, insbesondere 300 T/m bis 500 T/m, und kann mit jener des Garnes 2 übereinstimmen.

Die beiden Garne 2 und 3 werden zu einem Hybridkord 1 endverdreht, dessen Drehrichtung entgegengesetzt zu jener der Garne 2 und 3 ist. Die Verdrehungszahl des Hybridkordes 1 kann im Bereich jener der Garne 2 und 3 liegen.

Um eine optimale Anbindung an die Gummimatrix zu ermöglichen, kann der Hybridkord 1 in bekannter Weise beispielsweise mit einem üblichen RFL(Resorzin-Formaldehyd-Latex)-Klebemittel imprägniert werden. Um ein gutes Eindringen in die Zwischenräume zwischen den Filamenten bzw. Fasern sicherzustellen, kann eine Vorbehandlung mit auf Epoxidharz oder geblocktem Isocyanat basierenden Verbindungen erfolgen. Zur Erhöhung der Steifigkeit des Hybridkordes 1 kann eine Vorbehandlung in einem Dip-Bad, welches Toluol enthält, erfolgen, wobei eine möglichst gute Penetration angestrebt ist. Diese Maßnahme soll vor allem die Biegesteifigkeit des Hybridkordes 1 beeinflussen und das Schneiden des Hybridkordes 1 erleichtern, beispielsweise wenn Kautschukmischungsbahnen mit eingebetteten Hybridkorden zu Bauteilen von Fahrzeugluftreifen, wie Karkasslagen, Gürtellagen und Gürtelbandagenlagen geschnitten werden.

Der erfindungsgemäße Hybridkord 1 besitzt einen vergleichsweise hohen Elastizitätsmodul ab ca. 3 % Dehnung, aber eine niedrige Hysterese. Letztere ist insbesondere auf das Garn 3 aus Stapelfasern zurückzuführen. Wird ein erfindungsgemäßer Hybridkord 1 als Festigkeitsträger in der Karkasse, in Gürtellagen oder Gürtelbandagenlagen als Festigkeitsträger verwendet, wird er beim Reifenaufbau - bei der Bombage - des Rohreifens und anschließend beim Einformen des Reifens in eine Vulkanisationsform - bei der sogenannten Resterhebung - gedehnt. Dadurch verformt bzw. dehnt sich der Hybridkord 1 auf die in Fig. 3 schematisch und übertrieben dargestellte Weise, das Garn 3 vorrangig durch ein gegenseitiges Abgleiten der Fasern aneinander, daher mit vergleichsweise geringem Reibungsverlust. Das Garn 2 verläuft in Längserstreckung des Hybridkordes 1, das Garn 3 spiralig um das Garn 2, wobei die einzelnen Windungen einen gewissen gegenseitigen Abstand aufweisen. Der erfindungsgemäße Hybridkord 1 weist infolge des Garnes 3 aus Stapelfasern eine geringe Hysterese auf, insbesondere im Vergleich zu einem herkömmlichen Hybridkord aus einem Filamentgarn aus Aramid und einem Filamentgarn aus Nylon.

Ein erfindungsgemäß ausgeführter Hybridkord kann auch die Konstruktion 1×3 aufweisen, entweder mit zwei Garnen gemäß Garn 2 oder mit zwei Garnen gemäß Garn 3 wie beschrieben.

### Bezugsziffernliste

- 1: Hybridkord
- 2: Garn
- 3: Garn

## Patentansprüche

1. Hybridkord (1) zur Verwendung als Festigkeitsträger in einem Bauteil eines Fahrzeugluftreifens aus zumindest zwei miteinander endverdrehten Garnen (2, 3), wobei wenigstens ein erstes Garn (2) ein hochmoduliges Garn ist und ein weiteres Garn (3) ein niedermoduliges Garn ist,
**dadurch gekennzeichnet,**
**dass** das hochmodulige Garn (2) ein Filamentgarn und das niedermodulige Garn (3) ein Garn aus Stapelfasern ist, wobei das hochmodulige Garn (2) eine Bruchdehnung in einem Bereich von 2 % bis 8 % und das niedermodulige Garn (3) aus Stapelfasern eine Bruchdehnung im Bereich ≥ 9 % aufweist.

2. Hybridkord (1) nach Anspruch 1, **dadurch gekennzeichnet, dass** die Stapelfasern Fasern aus Aramid, Polyimid, PPS, Polyamid, Polyester oder PEEK sind.

3. Hybridkord (1) nach Anspruch 1, **dadurch gekennzeichnet, dass** die Stapelfasern Naturfasern aus Baumwolle, Jute, Flachs, Viskose^{®} oder Modal^{®} sind.

4. Hybridkord (1) nach Anspruch 1, **dadurch gekennzeichnet, dass** das hochmodulige Garn (2) aus Filamenten aus Aramid, Polyimid, PPS oder PEEK besteht.

5. Hybridkord (1) nach einem der Ansprüche 1 bis 4, **dadurch gekennzeichnet, dass** das hochmodulige Garn (2) eine Feinheit von 500 dtex bis 2500 dtex, insbesondere von 1100 dtex bis 1800 dtex, aufweist.

6. Hybridkord (1) nach einem der Ansprüche 1 bis 5, **dadurch gekennzeichnet, dass** das Garn (3) aus Stapelfasern eine Feinheit von 300 dtex bis 1400 dtex, insbesondere von 400 dtex bis 1100 dtex, aufweist.

7. Fahrzeugluftreifen in Radialbauart mit einer Radialkarkasse, einem mehrlagigen Gürtel und gegebenenfalls einer den Gürtel radial außen bedeckenden Gürtelbandage, **dadurch gekennzeichnet, dass** zumindest eine Gürtellage als Festigkeitsträger einen Hybridkord (1) gemäß einem oder mehreren der Ansprüche 1 bis 6 aufweist.

8. Fahrzeugluftreifen in Radialbauart mit einer Radialkarkasse, einem mehrlagigen Gürtel und gegebenenfalls einer den Gürtel radial außen bedeckenden Gürtelbandage, **dadurch gekennzeichnet, dass** die Radialkarkasse als Festigkeitsträger einen Hybridkord (1) gemäß einem oder mehreren der Ansprüche 1 bis 6 aufweist.

9. Fahrzeugluftreifen in Radialbauart mit einer Radialkarkasse, einem mehrlagigen Gürtel und gegebenenfalls einer den Gürtel radial außen bedeckenden Gürtelbandage, **dadurch gekennzeichnet, dass** die Gürtelbandage als Festigkeitsträger einen Hybridkord (1) gemäß einem oder mehreren der Ansprüche 1 bis 6 aufweist.

## Claims

1. Hybrid cord (1) for use as a rigidity support in a component part of a pneumatic vehicle tyre comprising two or more mutually end-twisted yarns (2, 3), wherein at least a first yarn (2) is a high-modulus yarn and a further yarn (3) is a low-modulus yarn,
**characterized in that**
the high-modulus yarn (2) is a filament yarn and the low-modulus yarn (3) is a yarn formed of staple fibres, wherein the high-modulus yarn (2) has a breaking extension in a range from 2% to 8% and the low-modulus yarn (3) of staple fibres has a breaking extension in the range ≥ 9%.

2. Hybrid cord (1) according to Claim 1, **characterized in that** the staple fibres are fibres in aramid, polyimide, PPS, polyamide, polyester or PEEK.

3. Hybrid cord (1) according to Claim 1, **characterized in that** the staple fibres are natural fibres in cotton, jute, flax, Viskose^{®} or Modal^{®}.

4. Hybrid cord (1) according to Claim 1, **characterized in that** the high-modulus yarn (2) consists of filaments in aramid, polyimide, PPS or PEEK.

5. Hybrid cord (1) according to any one of Claims 1 to 4, **characterized in that** the high-modulus yarn (2) has a fineness of 500 dtex to 2500 dtex, in particular of 1100 dtex to 1800 dtex.

6. Hybrid cord (1) according to any one of Claims 1 to 5, **characterized in that** the yarn (3) of staple fibres has a fineness of 300 dtex to 1400 dtex, in particular of 400 dtex to 1100 dtex.

7. Pneumatic vehicle tyre in radial construction having a radial carcase, a multi-ply belt and optionally a belt bandage covering the belt radially exteriorly, **characterized in that** at least one belt ply includes a hybrid cord (1) according to one or more of Claims 1 to 6 as a rigidity support.

8. Pneumatic vehicle tyre in radial construction having a radial carcase, a multi-ply belt and optionally a belt bandage covering the belt radially exteriorly, **characterized in that** the radical carcase includes a hybrid cord (1) according to one or more of Claims 1 to 6 as a rigidity support.

9. Pneumatic vehicle tyre in radial construction having a radial carcase, a multi-ply belt and optionally a belt bandage covering the belt radially exteriorly, **characterized in that** the belt bandage includes a hybrid cord (1) according to one or more of Claims 1 to 6 as a rigidity support.

## Revendications

1. Câble hybride (1) destiné à être utilisé comme renfort dans un composant d'un bandage pneumatique pour roue de véhicule, constitué d'au moins deux fils (2, 3) dont les extrémités sont torsadées l'une avec l'autre, au moins un premier fil (2) étant un fil à haut module et un autre fil (3) un fil à bas module,
**caractérisé en ce que**
le fil (2) à haut module est un fil en filaments et le fil (3) à bas module un fil en fibres empilées, le fil (2) à haut module présentant un allongement à la rupture de l'ordre de 2 % à 8 % et le fil (3) à bas module en fibres empilées un allongement à la rupture de l'ordre de ≥ 9 %.

2. Câble hybride (1) selon la revendication 1, **caractérisé en ce que** les fibres empilées sont des fibres d'aramide, de polyimide, de PPS, de polyamide, de polyester ou de PEEK.

3. Câble hybride (1) selon la revendication 1, **caractérisé en ce que** les fibres empilées sont des fibres naturelles en coton, jute, lin, viscose® ou Modal®.

4. Câble hybride (1) selon la revendication 1, **caractérisé en ce que** le fil (2) à haut module est constitué de filaments d'aramide, de polyimide, de PPS ou de PEEK.

5. Câble hybride (1) selon l'une des revendications 1 à 4, **caractérisé en ce que** le fil (2) à haut module présente une finesse de 500 dtex à 2 500 dtex et en particulier de 1 100 dtex à 1 800 dtex.

6. Câble hybride (1) selon la revendication 1 à 5, **caractérisé en ce que** le fil (3) en fibres empilées présente une finesse de 300 dtex à 1 400 dtex et en particulier de 400 dtex à 1 100 dtex.

7. Bandage pneumatique pour roue de véhicule, à structure radiale dotée d'une carcasse radiale, présentant une ceinture multicouche et éventuellement un bandage de ceinture qui recouvre la ceinture radialement vers l'extérieur,
**caractérisé en ce que**
au moins une couche de ceinture présente comme renforts un câble hybride (1) selon une ou plusieurs des revendications 1 à 6.

8. Bandage pneumatique pour roue de véhicule, à structure radiale dotée d'une carcasse radiale, présentant une ceinture multicouche et éventuellement un bandage de ceinture qui recouvre la ceinture radialement vers l'extérieur, **caractérisé en ce que** la carcasse radiale présente comme renforts un câble hybride (1) selon l'une ou plusieurs des revendications 1 à 6.

9. Bandage pneumatique pour roue de véhicule, à structure radiale dotée d'une carcasse radiale, présentant une ceinture multicouche et éventuellement un bandage de ceinture qui recouvre la ceinture radialement vers l'extérieur, **caractérisé en ce que** le bandage de ceinture présente comme renforts un câble hybride (1) selon l'une ou plusieurs des revendications 1 à 6.
